Europäisches Patentamt

(19) European Patent Office

Office européen des brevets

(11) Publication number : **0 599 530 A1**

# (12) EUROPEAN PATENT APPLICATION

(21) Application number : 93309123.3

(51) Int. Cl.⁵ : **A23L 1/216, A23P 1/12**

(22) Date of filing : 15.11.93

(30) Priority : **20.11.92 GB 9224438**

(43) Date of publication of application :
**01.06.94 Bulletin 94/22**

(84) Designated Contracting States :
**AT BE CH DE DK ES FR GB GR IE IT LI NL PT
SE**

(71) Applicant : **UNILEVER PLC**
**Unilever House**
**Blackfriars**
**London EC4P 4BQ (GB)**
(84) **GB IE**

(71) Applicant : **UNILEVER N.V.**
**Weena 455**
**NL-3013 AL Rotterdam (NL)**
(84) **BE CH DE DK ES FR GR IT LI NL PT SE AT**

(72) Inventor : **Bamford, Sarah Jane**
**31 Cotters Drive,**
**Hopton-on-Sea**
**Great Yarmouth, Norfolk NR31 9RW (GB)**

(74) Representative : **Roscoe, Brian Corrie et al**
**UNILEVER PLC**
**Patents Division**
**Colworth House**
**Sharnbrook**
**Bedford MK44 1LQ (GB)**

(54) **Simulated potato product.**

(57)  A simulated potato product in slice form is obtained by co-extruding a core containing at least about 80% by wt potato mash within a shell of a composition containing at least about 40% potato mash.

EP 0 599 530 A1

## FIELD OF THE INVENTION

This invention relates to food products, in particular those comprising potato. When preparing potato products intended for eating as a separate snack or as a component of another product, eg a ready cooked meal, a considerable degree of handling is necessary in the preparation and cooking of the potato feedstock.

## BACKGROUND TO THE INVENTION

Potatoes are a valuable source of nutrition and the amount of handling necessary to prepare them can make them uneconomic as a food product prepared for large scale production. The present invention provides a process for the preparation of a potato product suitable for such production. The product resembles, ie simulates, slices of a potato vegetable which has been subjected to a cooking stage, eg baking, and then sliced.

## GENERAL DESCRIPTION OF THE INVENTION

The invention is particularly directed to a process wherein a composition containing potato mash, preferably at a level above 80% by wt and more preferably above 90%, is co-extruded with a shell of a potato composition containing at least about 40%, preferably at least about 50%, to about 65% of potato mash and usually at least about 15% additional water to form an elongate product, which is then sliced across the axis of extrusion to provide slices of a potato based product, which slices are then cooked, preferably fried. Alternatively the shell contains at least about 70%, preferably at least about 80%, of potato mash without addition of water. The separate compositions may include suitable colouring and/or seasoning materials to make the composite slice more comparable to the natural product. Additionally, the colouring/seasoning can provide a distinct product having a specific flavour. In order to provide the appearance of a peripheral skin the shell will show, in section, about 15% to about 25% preferably to about 22% of the area of the total slice. However this upper limit could be increased to give a more distinctive skin, if a specific product design required it. Potato mash is formed by boiling potatoes and mashing them to form a product which is deformable but retains its shape. The shell, ie skin, being formulated from potato mash, adheres to the core and remains intact during production and packing.

Additionally, the extrusion may be performed using shaped sections in the extrusion nozzle which give a section other than that associated with a sliced vegetable. Thus, the outer surface of the nozzle may be given a corrugated effect to provide an outer shell, ie the baked potato skin, of varying thickness. Such variations can imitate those decorations which would be applied by a cook in the preparation of a meal. These variations would be particularly useful if the slice was intended as a snack product for consumption as a separate foodstuff. The slices will usually be made at an angle of 90° to the axis of extrusion, however other angles may be chosen to provide elongate slices. The separate slices will have a consistency of section derived from the extrusion process. The shell will preferably contain a flour to provide a dough consistency. Usually this flour will be present in the range of about 1% to about 5% by wt.

## Literature

EPA 0402178 (Unilever) describes an extruded vegetable product, especially made from potato, in folded or convoluted form.

US 4167588 (Willard) describes the fabrication of a whole baked potato from potato mash and a skin prepared from baked potato pieces. The objective of Willard is to simulate a complete baked potato both for appearance and taste.

## SPECIFIC DESCRIPTION OF THE INVENTION

An example of the process and product of the invention will now be given with reference to the accompanying diagrammatic drawings in which:

Figure 1 is an axial section through a co-extrusion device;

Figure 2 is an enlarged view in the direction I-I of Fig 1.

The co-extrusion apparatus comprises a barrel 1 having a cylinder 2 positioned co-axially within it to form a peripheral annulus 4. A potato composition is introduced into the annulus through the input port 6 and a mash composition into the central core volume 3 through port 5. The apparatus includes a flow control valve 7 to vary the flow of mash from port 5 into core 3. The paths of the two inputs are shown hatched for clarity.

One formulation for the core and two for the periphery were prepared:

Core formulation

| Ingredient | wt% |
|---|---|
| potato mash | 92.20 |
| rice flour | 3.53 |
| potato granules | 3.35 |
| salt | 0.78 |
| Celacol* | 0.10 |
| ascorbic acid | 0.04 |
| Total | 100.00 |

Edge(skin) formulation

| | A | B |
|---|---|---|
| potato mash | 58.45 | 79.144 |
| water | 22.54 | none added |
| seasoning | 10.00 | 10.01 |
| rusk | 2.40 | 2.40 |
| rice flour | 2.24 | 3.03 |
| potato granules | 2.122 | 2.876 |
| poppy seeds | 1.20 | 1.20 |
| salt | 0.58 | 0.75 |
| starch | 0.143 | 0.3 |
| Celacol* | 0.143 | 0.166 |
| ascorbic acid | 0.025 | 0.034 |
| Total | 100.00 | 100.00 |

* Celacol is hydroxypropylmethylcellulose obtainable from Courtaulds Ltd of England.

These formulations, ie Core + Shell A, were co-extruded at a temperature of 10°C in a weight ratio of shell:core in the range from about 15:85 to about 25:75 and preferably to about 22:78 to give an extruded product comprising a central core with a shell. When sliced across the extrusion axis at 90°and fried, slices of a potato product resembling baked potato was obtained. The shell could be visually distinguished from the core after subjecting the slices to frying.

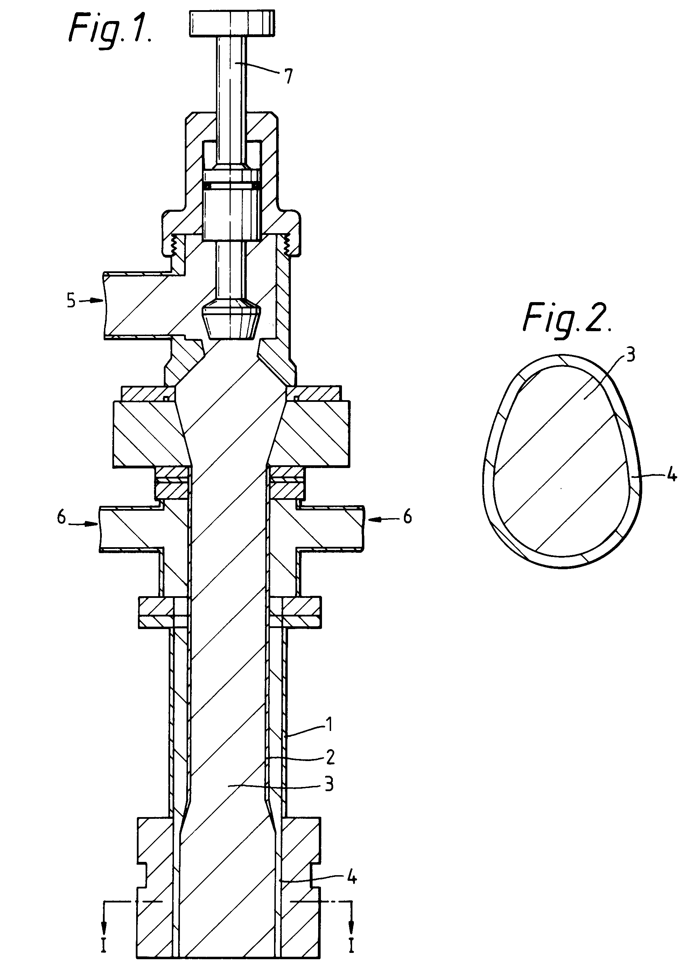

From Figure 2 it is seen the section of the extrusion nozzle, and thus the slice section, is not circular but approximates the section of a natural vegetable. Other sections, eg square and hexagonal, can be used to provide a novelty product.

These examples were repeated using a modified extrusion apparatus and using the core + shell B compositions. This had input port 6 at 45° so the two streams came together separated by only 45°. This port 6 also had a valve to control the flow of outer shell material. Additionally the co-axial barrel 1 and cylinder 2 were constructed to have the sectional profile of the desired product along the whole of their length.

The repeated examples gave commercially acceptable products after slicing and frying.

The product according to the invention thus simulates a slice of a baked potato at least in appearance.

**Claims**

1. A method of preparing a potato containing product wherein a composition containing at least about 80% by wt of potato mash is extruded within a shell of a potato composition containing at least about 40% by wt potato mash to form an elongate product which is cut across the extrusion axis to give a slice product, which is then cooked.

2. A method according to claim 1 wherein the weight ratio of the shell:core was in the range from about 15:85 to about 25:75.

3. A method according to claim 1 or 2 wherein the weight ratio is up to about 22:78.

4. A method according to any preceding claim wherein the shell contains flour.

Fig.1.

7

5

6

6

1

2

3

4

I

I

Fig.2.

3

4

**European Patent Office**

## EUROPEAN SEARCH REPORT

Application Number

EP 93 30 9123

### DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X,D | US-A-4 167 588 (M.J. WILLARD) <br> * the whole document * <br> --- | 1-4 | A23L1/216 <br> A23P1/12 |
| A | GB-A-1 439 233 (E.F. GLABE) <br> ----- | | |

TECHNICAL FIELDS SEARCHED (Int.Cl.5)

A23L
A23P

The present search report has been drawn up for all claims

| Place of search | Date of completion of the search | Examiner |
|---|---|---|
| THE HAGUE | 10 March 1994 | Vuillamy, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)